# EUROPEAN PATENT SPECIFICATION

(11) **EP 3 420 385 B1**
(45) Date of publication and mention of the grant of the patent: **20.04.2022**
(21) Application number: 17757206.2
(22) Date of filing: 23.02.2017
(51) Int. Cl.: G02B 1/04, G02C 7/04

(54) **SOL-GEL COATINGS FOR CONTACT LENSES**
SOL-GELBESCHICHTUNG FÜR KONTAKTLINSEN
REVÊTEMENTS SOL-GEL POUR LENTILLES DE CONTACT

(30) Priority: 23.02.2016 US 201662298573 P; 29.03.2016 US 201662314566 P
(43) Date of publication of application: 02.01.2019
(73) Proprietor: Lotus Leaf Coatings Inc., Albuquerque, NM 87107 (US)
(72) Inventor: CHAVEZ, Lawrence, Albuquerque NM 87122 (US); GOSAU, Jan-Michael, Albuquerque NM 87111 (US); SANCHEZ, Christopher, Albuquerque NM 87121 (US)
(74) Representative: Octrooibureau Los en Stigter B.V.
(86) International application number: PCT/US2017/019128
(87) International publication number: WO 2017/147292

(56) References cited:
- WO-A1-82/03397
- DE-A1- 19 900 492
- US-A- 5 789 476
- US-A1- 2006 012 752
- US-A1- 2007 068 421
- US-A1- 2010 113 901
- US-B1- 6 309 658
- WU K H ET AL: "Synthesis and characterization of polydimethylsiloxane-cured organically modified silicate hybrid coatings", POLYMER DEGRADATION AND STABILITY, BARKING, GB, vol. 91, no. 12, 1 December 2006 (2006-12-01), pages 2917-2923, XP027949708, ISSN: 0141-3910 [retrieved on 2006-12-01]
- PHILIPP ET AL.: 'New materials for contact lenses prepared from Si- and Ti-alkoxides by the sol-gel process' JOURNAL OF NON-CRYSTALLINE SOLIDS vol. 63, no. 1-2, February 1984, pages 283 - 292, XP024063632
- LIU ET AL.: 'An aqueous sol-gel route to prepare organic-inorganic hybrid materials' JOURNAL OF MATERIALS CHEMISTRY vol. 17, no. 41, 28 August 2007, pages 4430 - 4435, XP055410269

## Description

### CROSS-REFERENCE TO RELATED APPLICATIONS

This application claims priority to and the benefit of the filing of U.S. Provisional Patent Application Serial No. 62/298,573, entitled "Sol-Gel Coatings for Siloxane-containing Contact Lenses", filed on February 23rd 2016, and U.S. Provisional Patent Application Serial No. 62/314,566, entitled "Sol- Gel Coatings for Siloxane-containing Contact Lenses", filed on March 29th 2016.

### BACKGROUND OF THE INVENTION

### Field of the Invention (Technical Field):

The present invention relates to surface treatments for contact lenses, in particular for treatment to increase the hydrophilic properties of siloxane-based lenses.

### Background Art:

Note that the following discussion may refer to a number of publications and references. Discussion of such publications herein is given for more complete background of the scientific principles and is not to be construed as an admission that such publications are prior art for patentability determination purposes.

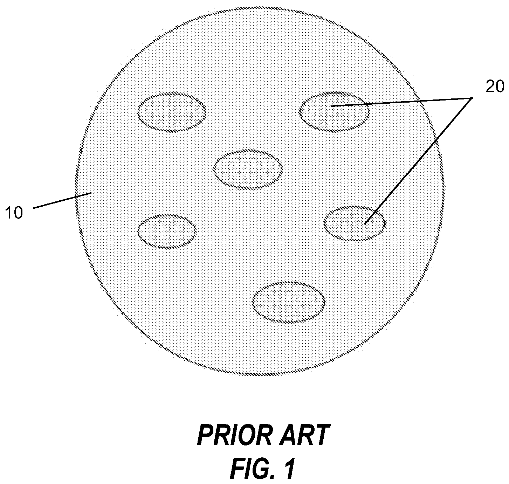

Modern silicone contact lenses are typically produced from polydimethylsiloxane or other siloxanes as base material due to the high oxygen permeability of the polymer. Unfortunately, the base material is highly hydrophobic and is not wetted by the tear fluid of the eye. This aggravates the user and makes the unmodified base material unusable as contact lens material. To improve the wear comfort of the lenses, the base material is most often converted to an interpenetrating network with a highly hydrophilic second polymer, typically described as a hydrogel . This silicone hydrogel material allows the finished lens to absorb up to 50% water and be acceptable to the user. Unfortunately, as shown in FIG. 1, the surface of the lens still comprises both hydrophilic regions 10 (where the hydrogel is exposed) and hydrophobic regions 20 comprising the surface siloxane. This limits the user comfort. There is, therefore, an unmet need of a surface treatment that can permanently coat the hydrophobic regions of the lens with a hydrophilic coating without influencing the rest of the properties of the lens. U.S. Patent No. 6,126,733 (Wallace et al) teaches compositions with hydrophilic character, wherein the films rely on high boiling solvents to achieve their properties upon evaporations. Further hybrid coatings are known from K.H.Wu et al.: "Synthesis and characterization of polydimethylsiloxane-cured organically modified silicate hybrid coatings" in the paper Polymer degradation and stability, Barking, GB, vol. 91, no.12, 1 december 2006. In this paper hybrid coatings based on polydimethylsiloxane-cured organically modified silicate were synthesized through a sol-gel technique. Amino-terminated siloxane, 3-glycidoxypropyltrimethoxysilane and tetraethoxysilane were used as precursors for the hybrid coatings. These hybrid films were deposited via spin coating onto an aluminum alloy to improve the corrosion protection.

### SUMMARY OF THE INVENTION (DISCLOSURE OF THE INVENTION)

An embodiment of the present invention is a contact lens comprising a hydrophobic surface and a coating comprising hydrophilic sol-gel particles bound to a hydrophobic material, the hydrophobic material. The hydrophobic material preferably comprises a silicone compound, more preferably a siloxane oligomer. The hydrophobic material preferably comprises one or more functional groups, which are preferably each selected from the group consisting of a hydride, amino, amine, hydroxyl, epoxy, vinyl, acrylate, and mercapto group. The sol-gel particles are preferably derived from a metal alkoxide precursor comprising one or more functional groups each selected from the group consisting of an epoxy, carboxylic acid, vinyl, acrylate, amino group. The functional group optionally comprises 3-glycidylpropylsiloxane.

The coating preferably has a thickness less than one micron, more preferably between 50 and 500 nm. The coating is preferably bound only to first regions of the article, for example regions which were hydrophobic prior to coating with the coating. The surfaces of the first regions preferably comprise a siloxane such as polymethylsiloxane resin. Regions of the article not comprising the first regions were preferably hydrophilic prior to coating with the coating. The coating was preferably deposited on the first regions from solution, preferably at no higher than ambient temperature, since the article might optionally be damaged if heated to a temperature above ambient temperature. The article is preferably stored in an acidic solution, which preferably comprises low pH distilled water, low pH saline, or a heat sensitive buffer. The buffer preferably comprises Tris(hydroxymethyl)aminomethane (TRIS). The buffer optionally releases an acid upon heating of the solution. The coating preferably remains unmodified when heated to above ambient temperature in the solution. The coating preferably remains unmodified when heated to about 120 °C in the solution. The contact angle of the coating preferably increases by less than approximately 5 degrees after heating in the solution.

Objects, advantages and novel features, and further scope of applicability of the present invention will be set forth in part in the detailed description to follow, taken in conjunction with the accompanying drawings, and in part will become apparent to those skilled in the art upon examination of the following, or may be learned by practice of the invention. The objects and advantages of the invention may be realized and attained by means of the instrumentalities and combinations particularly pointed out in the appended claims.

### BRIEF DESCRIPTION OF THE DRAWINGS

The accompanying drawings, which are incorporated into and form a part of the specification, illustrate several embodiments of the present invention and, together with the description, serve to explain the principles of the invention. The drawings are only for the purpose of illustrating a preferred embodiment of the invention and are not to be construed as limiting the invention. In the drawings:
FIG.1 is a schematic representation of surface properties of regions of a contact lens.
FIG. 2 shows a hydrophilic coating bound to hydrophobic regions of a contact lens

### DETAILED DESCRIPTION OF EMBODIMENTS OF THE INVENTION

Embodiments of the present invention are compositions for the production of hydrophilic coatings on a substrate, such as a contact lens comprising a hydrogel, siloxane, or both, the compositions comprising at least one hydrolyzed metal alkoxide comprising a functional group capable of further reaction and at least one functionalized siloxane oligomer or polymer capable of reacting with the alkoxide functional group. The alkoxide can be functionalized with an epoxy, carboxyl acid, vinyl, acrylate, or amino group. The siloxane can be functionalized with a hydride or with an amino, hydroxyl, epoxy, vinyl, acrylate, or mercapto group.

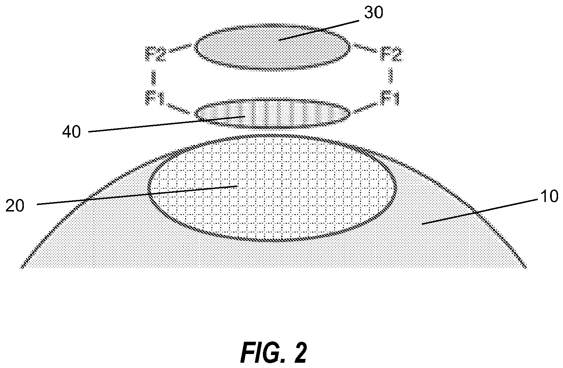

Embodiments of the present invention are based on sol-gel silica coatings preferably comprising hydrophilic particles **30,** which preferably comprise functional groups F2, and reactive binder **40,** which preferably comprises functional groups F1 which bind to functional groups F2. The binder binds the particles specifically to the hydrophobic siloxane regions of the lens, as shown in FIG. 2. The particles coalesce together on the surface to form a continuous coating. The coatings of the present invention are preferably submicron in thickness, more preferably having a thickness between 50 and 500 nanometers, and are synthesized in solution, enabling the addition of modifiers to the finished sol-gel particles. The reaction of functional groups F2 such as epoxy moieties with the binder enables it to bind to the hydrophilic particles. More specifically, the hydrophobic silicone-based binder bonds to the hydrophobic silicone-based sections of the contact lens due to the unique interaction between the two compounds. Silicones, for example siloxanes, while often liquid, are still high-molecular weight polymeric materials. As such, their interaction with other materials is not just governed by typical liquid-solid parameters like contact angle but also by the ability to undergo true adhesion with other silicone materials. This autohesion is usually governed by diffusion of polymeric chains across the interface and entanglement of chains in both materials. This imparts hydrophilic properties to the hydrophobic siloxane surfaces, while leaving the hydrophilic hydrogel regions of the lens surface unmodified.

Embodiments of the present coatings preferably rely on the chemical similarity between solid polydimethylsiloxane resins incorporated into the contact lens and oligomeric liquid siloxanes of the binder with functional groups. The liquid siloxanes preferably deposit on the siloxane polymer portions of the lens and provide the anchoring force for the sol-gel coating. Liquid siloxanes are available with a wide variety of both terminal and perpendicular bound functional groups, including amino, hydroxyl, epoxy, hydride, vinyl, acrylate, and mercapto groups. Corresponding functional modifiers on metal alkoxide sol-gel precursors, including epoxy, carboxylic acid, vinyl, acrylate, and amino group carrying metal alkoxides may be used, preferably epoxy-carrying silicon alkoxides.

Sol-gel solutions can be produced by first hydrolyzing a mixture of the desired metal alkoxides, typically a silicon alkoxide, with an excess amount of water in a mildly acidic solution until partial or full hydrolysis has occurred. By changing the pH of the solution to mildly basic the growth of the resulting gel is initiated, and continued for varying times until a test sample, which is preferably spun-coated onto a substrate, has a contact angle of 20° or less. At this point the solution is neutralized to stabilize the gelation process at the desired stage. The resulting sol-gel particle sizes typically range from 10 to 200 nm, and the sol appears optically clear. Spun-coated test coatings typically show a thickness of 20 - 200 nm and are optically clear.

The major advantage of this synthesis method lies in the ease of application of the coatings on a variety of substrates. As all chemical processes of the present invention preferably occur in solution, high heat is not required to form the coatings. In some embodiments of the present invention, the formation of the coating is performed at ambient temperatures. This enables use on substrates not typically used with sol-gel coatings, like plastics, fabrics or other temperature sensitive materials.

To produce coatings on highly hydrophobic materials it is preferable to add a reactive binder to produce a good bond between the substrate and the overlying hydrophilic coating. The reactive binder is typically chosen from materials comprising a chain that is hydrophobic or otherwise compatible with the substrate and a reactive moiety that binds to the coating. In embodiments of the present invention, the compatible chain preferably comprises a siloxane oligomer and a reactive moiety such as an amine (F1) which binds to the hydrophilic sol-gel particle. The corresponding functionality F2 in the sol-gel coating preferably comprises an epoxy based on 3-glycidylpropylsiloxane incorporated into the gel.

Coatings made using the compositions disclosed above are preferably stable at room temperature in phosphate buffered saline (PBS) solution. PBS at pH 7.3 is typically used for storage of contact lenses to avoid irritation of the eye when the lens is used due to solution remaining on the lens. In commercial processing of lenses for customer use the lenses are typically heated in this buffer to sterilize them prior to sale. However, heating certain hydrophilically treated contact lenses to autoclave temperatures of 121°C in PBS in order to sterilize the solution typically irreversibly destroys the coating of the present invention.

To prevent destruction of the coating, the pH of the solution is preferably lowered to a pH from approximately 1-7, more preferably between approximately 3 - 6.5, and even more preferably between approximately 3.5 - 4.5. Solutions that can be used in accordance with this embodiment of the present invention include but are not limited to low pH distilled water, low pH saline, or heat-sensitive buffer, for example Tris(hydroxymethyl)aminomethane (TRIS). Coatings of the present invention can withstand such heating at such lower pH.

### Examples

### Example 1

A nanogel containing 80% hydrolyzed tetraethoxy silane and 20% hydrolyzed 3-glycidoxypropyltrimethoxysilane in an ethanol solution at 2% solids content, prepared according to the methodology disclosed herein, was blended with an equimolar amount of aminopropyl-terminated siloxane (1000 cSt), and allowed to react for 30 min. A siloxane-containing contact lens was immersed into the modified nanogel solution for 1 min, transferred to a clean deionized water solution for 1 min, and then transferred to a buffer solution.

### Example 2

A siloxane-containing contact lens was immersed into an ethanol solution of poly (aminopropyl-methyl-co-dimethyl siloxane (120 cSt) for 1 min. A nanogel containing 90% hydrolyzed tetraethoxy silane and 10% hydrolyzed 3-glycidoxypropyltrimethoxysilane in an ethanol solution with 1% solids content is added in an equimolar amount to the aminopropyl group on the siloxane, and allowed to react for 5 min. The lens was then transferred to a clean deionized water solution for 1 min, and then transferred to a buffer solution.

### Example 3

A nanogel containing 90% hydrolyzed tetraethoxy silane and 10% hydrolyzed methacryloxpropyl trimethoxysilane in an ethanol solution at 2% solids content, prepared according to the methodology disclosed herein, was blended with an equimolar amount of methacryloxpropyl -terminated siloxane (70 cSt). A siloxane-containing contact lens was immersed into the modified nanogel solution for 1 min, transferred to a clean deionized water solution for 1 min, and then transferred to a solution containing 0.01% AIBN. The solution was irradiated with a medium pressure mercury lamp for 30 sec to crosslink the coating.

### Example 4

A nanogel containing 90% hydrolyzed tetraethoxy silane and 10% hydrolyzed methacryloxpropyl trimethoxysilane in an ethanol solution at 2% solids content, prepared according to the methodology disclosed herein, was blended with an equimolar amount of methacryloxpropyl -terminated siloxane (70 cSt). A siloxane-containing contact lens was immersed into the modified nanogel solution for 1 min, transferred to a clean deionized water solution for 1 min, and then transferred to a solution containing 0.01% AIBN. The solution was then heated to 120 C for 30 min to crosslink the coating and sterilize the content.

### Example 5:

A coated contact lens as prepared in Example 1 was heated to 120 °C for 30 minutes in 2.5 mL deionized (DI) water comprising 1 drop (1N) HCI. The measured contact angle did not change after heating.

### Example 6:

A coated contact lens as prepared in Example 1 was heated to 120 °C for 30 minutes in 2.5 mL DI water comprising 5% NaCl and 1 drop (1N) HCI. The measured contact angle did not change after heating.

### Example 7:

A coated contact lens as prepared in Example 1 was heated to 120 °C for 30 minutes in 2.5 ml 10 mmol TRIS buffer. The contact angle increased slightly by about 5 degrees after heating.

Although the invention has been described in detail with particular reference to the disclosed embodiments, other embodiments can achieve the same results. Variations and modifications of the present invention will be obvious to those skilled in the art and it is intended to cover all such modifications and equivalents. The entire disclosures of all patents and publications cited above are hereby incorporated by reference.

## Claims

1. A contact lens comprising a hydrophobic surface and a coating comprising hydrophilic sol-gel particles bound to a hydrophobic material.

2. The contact lens of claim 1 wherein said hydrophobic material comprises a silicone compound.

3. The contact lens of claim 1 or 2 wherein said silicone compound comprises a siloxane oligomer.

4. The contact lens of any of claims 1-3 wherein said hydrophobic material comprises one or more functional groups.

5. The contact lens of claim 4 wherein said one or more functional groups are each selected from the group consisting of a hydride, amino, amine, hydroxyl, epoxy, vinyl, acrylate, and mercapto group.

6. The contact lens of any of claims 1-5 wherein said sol-gel particles are derived from a metal alkoxide precursor comprising an epoxy group, a carboxylic acid group, a vinyl group, an acrylate group, an amino group, 3-glycidylpropylsiloxane, or combinations thereof.

7. The contact lens of any of claims 1-6 wherein said coating has a thickness less than one micron.

8. The contact lens of any of claims 1-7 wherein said coating is bound only to regions of said contact lens which were hydrophobic prior to coating with said coating.

9. The contact lens of claim 8 wherein surfaces of said regions comprise a siloxane such as polymethylsiloxane resin.

10. The contact lens of any of claims 8-9 wherein said coating was deposited on said regions from solution.

11. The contact lens of any of claims 1-10 wherein said coating remains substantially unmodified when heated to above ambient temperature in an acidic solution.

12. The contact lens of claim 11 wherein said coating remains substantially unmodified when heated to about 120 °C in the acidic solution.

13. The contact lens of any of claims 1-12 wherein a contact angle of said coating increases by less than approximately 5 degrees after heating in an acidic solution.

## Patentansprüche

1. Kontaktlinse, die eine hydrophobe Oberfläche und eine Beschichtung umfasst, die hydrophile Sol-Gel-Partikel umfasst, die an ein hydrophobes Material gebunden sind.

2. Kontaktlinse nach Anspruch 1, wobei das hydrophobe Material eine Silikonverbindung umfasst.

3. Kontaktlinse nach Anspruch 1 oder 2, wobei die Silikonverbindung ein Siloxanoligomer umfasst.

4. Kontaktlinse nach einem der Ansprüche 1-3, wobei das hydrophobe Material eine oder mehrere funktionelle Gruppen umfasst.

5. Kontaktlinse nach Anspruch 4, wobei die eine oder die mehreren funktionellen Gruppen jeweils aus der Gruppe ausgewählt sind, die aus einer Hydrid-, Amino-, Amin-, Hydroxyl-, Epoxy-, Vinyl-, Acrylat- und Mercaptogruppe besteht.

6. Kontaktlinse nach einem der Ansprüche 1-5, wobei die Sol-Gel-Partikel von einem Metallalkoxidvorläufer abstammen, der eine Epoxygruppe, eine Carbonsäuregruppe, eine Vinylgruppe, eine Acrylatgruppe, eine Aminogruppe, 3-Glycidylpropylsiloxan oder davon Kombinationen umfasst.

7. Kontaktlinse nach einem der Ansprüche 1-6, wobei die Beschichtung eine Dicke von weniger als einem Mikrometer aufweist.

8. Kontaktlinse nach einem der Ansprüche 1-7, wobei die Beschichtung nur an Bereiche der Kontaktlinse gebunden ist, die vor dem Beschichten mit der Beschichtung hydrophob waren.

9. Kontaktlinse nach Anspruch 8, wobei die Oberflächen der Bereiche ein Siloxan wie etwa Polymethylsiloxanharz umfassen.

10. Kontaktlinse nach einem der Ansprüche 8-9, wobei die Beschichtung aus Lösung auf die Bereiche abgeschieden wurde.

11. Kontaktlinse nach einem der Ansprüche 1-10, wobei die Beschichtung im Wesentlichen unverändert bleibt, wenn sie in einer sauren Lösung auf über Umgebungstemperatur erwärmt wird.

12. Kontaktlinse nach Anspruch 11, wobei die Beschichtung im Wesentlichen unverändert bleibt, wenn sie in der sauren Lösung auf etwa 120 °C erwärmt wird.

13. Kontaktlinse nach einem der Ansprüche 1-12, wobei ein Kontaktwinkel der Beschichtung nach dem Erwärmen in einer sauren Lösung um weniger als ungefähr 5 Grad zunimmt.

## Revendications

1. Lentille de contact comprenant une surface hydrophobe et un revêtement comprenant des particules sol-gel hydrophiles liées à un matériau hydrophobe.

2. Lentille de contact selon la revendication 1, dans laquelle ledit matériau hydrophobe comprend un composé de silicone.

3. Lentille de contact selon la revendication 1 ou 2, dans laquelle ledit composé de silicone comprend un oligomère de siloxane.

4. Lentille de contact selon l'une quelconque des revendications 1 à 3, dans laquelle ledit matériau hydrophobe comprend un ou plusieurs groupes fonctionnels.

5. Lentille de contact selon la revendication 4, dans laquelle lesdits un ou plusieurs groupes fonctionnels sont chacun choisis dans le groupe constitué d'un groupe hydrure, amino, amine, hydroxyle, époxy, vinyle, acrylate et mercapto.

6. Lentille de contact selon l'une quelconque des revendications 1 à 5, dans laquelle lesdites particules sol-gel sont dérivées d'un précurseur d'alcoxyde métallique comprenant un groupe époxy, un groupe acide carboxylique, un groupe vinyle, un groupe acrylate, un groupe amino, du 3-glycidylpropylsiloxane ou leurs combinaisons.

7. Lentille de contact selon l'une quelconque des revendications 1 à 6, dans laquelle ledit revêtement a une épaisseur inférieure à un micron.

8. Lentille de contact selon l'une quelconque des revendications 1 à 7, dans laquelle ledit revêtement est lié uniquement aux régions de ladite lentille de contact qui étaient hydrophobes avant le revêtement avec ledit revêtement.

9. Lentille de contact selon la revendication 8, dans laquelle les surfaces desdites régions comprennent un siloxane tel qu'une résine polyméthylsiloxane.

10. Lentille de contact selon l'une quelconque des revendications 8 à 9, dans laquelle ledit revêtement a été déposé sur lesdites régions à partir de la solution.

11. Lentille de contact selon l'une quelconque des revendications 1 à 10, dans laquelle ledit revêtement reste sensiblement non modifié lorsqu'il est chauffé au-dessus de la température ambiante dans une solution acide.

12. Lentille de contact selon la revendication 11, dans laquelle ledit revêtement reste sensiblement non modifié lorsqu'il est chauffé à environ 120 °C dans la solution acide.

13. Lentille de contact selon l'une quelconque des revendications 1 à 12, dans laquelle un angle de contact dudit revêtement augmente de moins d'environ 5 degrés après avoir été chauffé dans une solution acide.
